# EUROPEAN PATENT APPLICATION

(11) **EP 1 925 589 A1**
(43) Date of publication of application: **28.05.2008**
(21) Application number: 06123471.2
(22) Date of filing: 03.11.2006
(51) Int. Cl.: C01B 13/02, C01B 13/10, C01B 15/027, A47L 15/00, A47L 15/42, C11D 3/39, C11D 11/00, D06F 35/00, B08B 3/08

(54) **Reactive oxygen species generator, washing device and washing method**

(71) Applicant: Koninklijke Philips Electronics N.V., 5621 BA Eindhoven (NL)
(72) Inventor: The designation of the inventor has not yet been filed
(74) Representative: Pet, Robert Jacob

(57) **Abstract**

The invention relates to a reactive oxygen species (ROS) generator (32), a washing device (30) and a washing method using such a ROS generator. The reactive oxygen species (ROS) generated by such a generator provide excellent washing power, and degrade organic stains rapidly to environmentally acceptable products. The generator according to the invention consumes less energy for a comparable washing effect compared to conventional washing machines.

## Description

### FIELD OF THE INVENTION

The invention relates to a reactive oxygen species (ROS) generator. The invention also relates to a washing device comprising such a ROS generator. The invention further relates to a washing method using such a ROS generator.

### BACKGROUND OF THE INVENTION

It is desirable to lower the amount of chemical bleaching agents such as hypochlorite, oxygen fluorides, chlorine dioxide and peroxides in washing agents. Such agents are expensive to produce, are often unstable in storage and may yield environmentally undesirable waste products. An alternative organic stain removal solution is to use ozone as a bleaching agent. Ozone has the advantage that it degrades to environmentally acceptable products, in particular water and oxygen. Ozone is usually generated from air or pure oxygen by electrical discharge generators that are classified as hazardous equipment unsuitable for unskilled operators. Also, electrical discharge generators have a relatively high energy consumption. Hence ozone washing systems are only used in professional washing equipment operated by skilled personnel.

### SUMMARY OF THE INVENTION

It is an object of the invention to provide an improved washing system.

The invention provides a reactive oxygen species generator, comprising at least one vessel for containing water, and at least one source of UV-light arranged to generate UV radiation of a wavelength range lower then 200 nm, wherein the source of UV-light is further arranged to irradiate, during operation, the water in the vessel. The reactive oxygen species (ROS) generated by such a generator provide excellent washing power, and degrade rapidly to environmentally acceptable products, in particular water. Also, when compared with electrical discharge ozone generators, the generator according to the invention consumes less energy for a comparable washing effect. When such a reactive oxygen species generator is employed, less washing detergents and softeners are needed to achieve the same washing result, when compared to washing without using the ROS generator. The reactive oxygen species generated typically comprise hydroxyl radicals, hydrogen peroxide, singlet oxygen, and ozone dissolved in water. As generated gaseous ROS are directly dissolved into water, the UV-light source is safe to operate by consumers, unlike for instance the gaseous ozone generated in electrical discharge equipment. The UV-light source is usually a lamp that is arranged within the vessel, or irradiates into the vessel through a window. Preferably, the window is made out of a material with a high transparency for UV light, such as UV graded quartz. The most effective range for the generation of ROS in water comprises UV-C and VUV at wavelengths lower than 200 nm. At such wavelengths, the generation of ROS in water is most effective. Preferably, UV graded quartz (synthetic quartz) is used in windows separating the UV light source and the water, as such materials have a high transparency for the most preferred UV wave lengths under 200 nm. The vessel may be the actual washing vessel, but may also be a throughput for water that is irradiated, through which the irradiated water containing ROS is delivered to the washing vessel. The ROS generator may be advantageously employed in various professional and domestic washing processes, such as the washing of textiles or dishes.

Preferably, the vessel is suitable for the throughput of water. Thus, the vessel receives water through an input, irradiates the water to generate ROS dissolved in the water, and delivers the irradiated water containing ROS through an output to a washing process, for instance a washing vessel.

In a preferred embodiment, the source of UV-light is arranged to generate UV radiation between 170 and 175 nm. At such wavelengths, a very efficient generation of the ROS in water is achieved.

In another preferred embodiment, the source of UV-light is arranged to generate UV radiation between 190 and 195 nm. At these wavelengths the penetration depth of irradiation into the water is larger than in the range between 170 and 175 nm, although the quantum efficiency of generating ROS is lower.

Preferably, the generator comprises a phosphor composition arranged to absorb at least part of the UV-light generated by the source of UV-light, which phosphor is arranged to generate UV light mainly at wavelengths lower than 200 nm. Thus, the generation of ROS is most energy-efficient and can be fine-tuned by varying the phosphor composition.

In a preferred embodiment, the phosphor composition is arranged to generate UV light between 190 and 195 nm. At these wavelengths the penetration depth of irradiation into the water is considerably increased and the most efficient generation of ROS is achieved.

Preferably, the phosphor composition comprises at least one component selected from the group consisting of NdPO₄, LiNdF₄, PrPO₄, LiPrF₄, BiPO₄, LiBiF₄. Such compositions enable the most energy-efficient generation of ROS. Mixtures of the phosphors mentioned above, as well as other phosphors, may be used to optimize the emitted spectrum for specific purposes.

It is advantageous if the source of UV-light comprises at least one lamp selected from mercury discharge lamps and excimer lamps. Such lamps are very efficient generators of UV light. Excimer lamps are more preferred, as mercury discharge lamps comprise mercury (Hg), which is a heavy metal with undesired environmental effects. Preferably, the UV light source has an electrical capacity of at least 50 W irradiated to the water, more preferably the capacity is at least 100 W.

In a preferred embodiment, the UV light source comprises a Xenon excimer lamp. Such lamp emits UV-light mainly at 172 nm, and yields a very efficient ROS generation in water. As an additional advantage, such a lamp does not contain environmentally undesirable elements such as mercury (Hg).

More preferably, the UV light source comprises a Xenon excimer lamp provided with a phosphor composition, wherein the phosphor composition is arranged to generate UV radiation between 190 and 195 nm. Such lamp provides an even more efficient generation of ROS from water.

The invention also provides a washing device, comprising a reactive oxygen species generator according to the invention. Such a washing device improves the washing results compared to a washing device without the ROS generator. Another advantage is that an effective washing is possible at relatively low temperatures, in particular lower than 40 °C, more in particular lower than 30 °C. Also, less additional washing agents such as detergents and softeners are needed in order to yield a comparable washing result. As another advantage, the ROS all degrade mainly to water, yielding more environmentally acceptable waste water. The ROS generator may be used in a water supply to the washing device, supplying irradiated water to a washing part of the device, or the ROS generator may be built directly into a washing part of the device.

In a preferred embodiment, the washing device is suitable for washing textile. A washing device with a ROS generator according to the invention yields an excellent result in washing textiles such as clothes. The ROS generated in situ result in improved organic stain removal, for instance in textiles or on glass and ceramics. The ROS generated in situ improve the cleaning and also destroy micro organisms such as bacteria, thus lessening the amount of disinfectants needed, which is in particular advantageous when washing textiles in hospitals and other medical situations.

In another preferred embodiment the washing device is suitable for washing solid objects, in particular dishes. A washing device with a ROS generator according to the invention yields an excellent result in washing dishes, either in a professional or a domestic type of dishwasher. As the generated ROS also destroy micro organisms such as bacteria, such washing equipment is particularly useful for the hygienic cleaning in a medical setting, for instance the cleaning of medical or dental gear.

The invention further provides a method of washing an object, comprising the steps of providing washing water, irradiation of the washing water with UV-light at a wavelength lower than 200 nm, and contacting the irradiated washing water with the object. Preferably, the washing water is irradiated at wavelengths mainly between 170 and 200 nm, more preferably between 190 and 195 nm. The washing method may further comprise additional process steps known from conventional washing methods.

The invention will now be further explained by the following non-restricting

### preferred embodiments.

### BRIEF DESCRIPTION OF THE DRAWINGS

Figures 1a, 1b and 1c schematically show radical oxygen species generators according to the invention.
Figures 2a and 2b schematically show washing devices according to the invention.

### DETAILED DESCRIPTION OF EMBODIMENTS

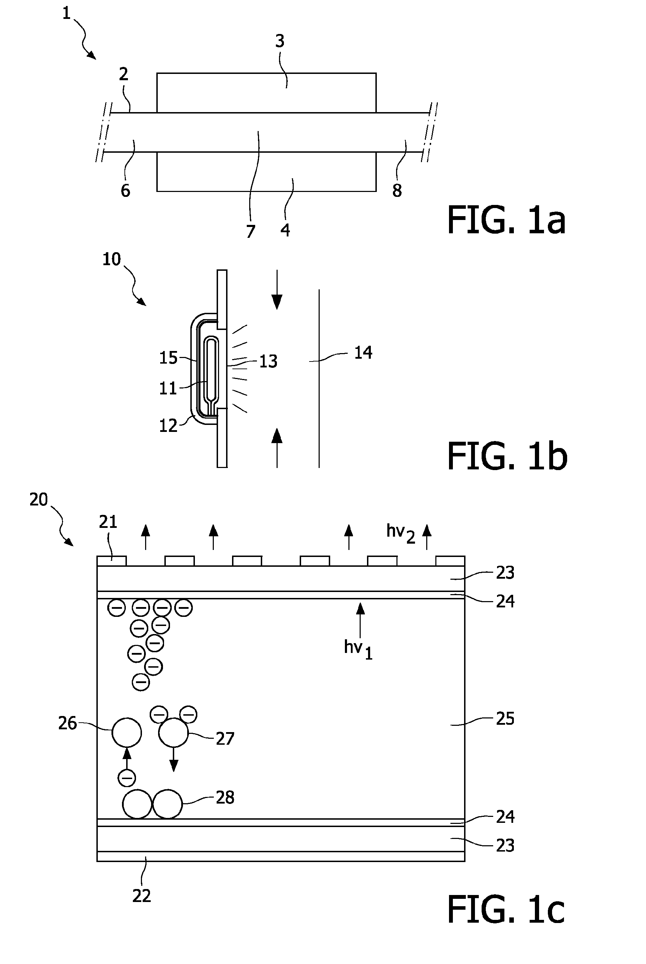

Figure 1a shows a tubular radical oxygen species (ROS) generator 1 according to the invention, comprising a UV-transparent funnel 2 around which an UV light source 3 is arranged. Preferably, the funnel 2 is made out of quartz glass. A dielectric barrier discharge lamp (DBD) is arranged around the funnel 2, containing Xenon gas in a gas discharge compartment 4. Xenon excimers emit UV light at 172 nm, which is converted to 193 nm by a phosphor layer 5, which may comprise NdPO₄, LiNdF₄, PrPO₄, LiPrF₄, BiPO₄, LiBiF₄ or mixtures thereof. Details of the lamp 3 are shown in figure 1c. Water 6 from a water supply (not shown) is led into the funnel 2 and irradiated in the irradiation zone 7, inducing the formation of reactive oxygen species (ROS) from the water. The irradiated water 8 comprising the ROS is led out of the generator 1 to for instance a washing device.

Figure 1b shows another configuration of a radical oxygen species (ROS) generator 10, wherein a UV-light source 11 is located in a compartment 12 with a UV-transparent window 13 through which UV-light is emitted to a vessel 14 suitable for containing water. Thus, reactive oxygen species (ROS) may be generated in water in the vessel 14. In order to improve the efficiency of ROS generation, the compartment 12 is provided with a reflector 15 directed towards the window 13.

Figure 1c shows a xenon excimer lamp 20 useable in radical oxygen species generators such as those shown in figure 1a and 1b. The lamp comprises a cathode 21 and an anode 22, deposited on a layer of dielectricum 23, preferably made out of UV-transparent quartz. On the inside, the di6lectricum 23 is provided with a phosphor layer 24, which may comprise NdPO₄, LiNdF₄, PrPO₄, LiPrF₄, BiPO₄, LiBiF₄ or mixtures thereof. The discharge space 25 comprises xenon gas 26, which forms charged species 27 that forms xenon excimers 28. The xenon emits upon discharge at a wavelength of 172 nm (hv₁), which is transformed by the phosphor layer 24 to a longer wavelength hv₂, in this case 193 nm, which is the optimum wavelength for inducing ROS in the water irradiated by the xenon lamp 20.

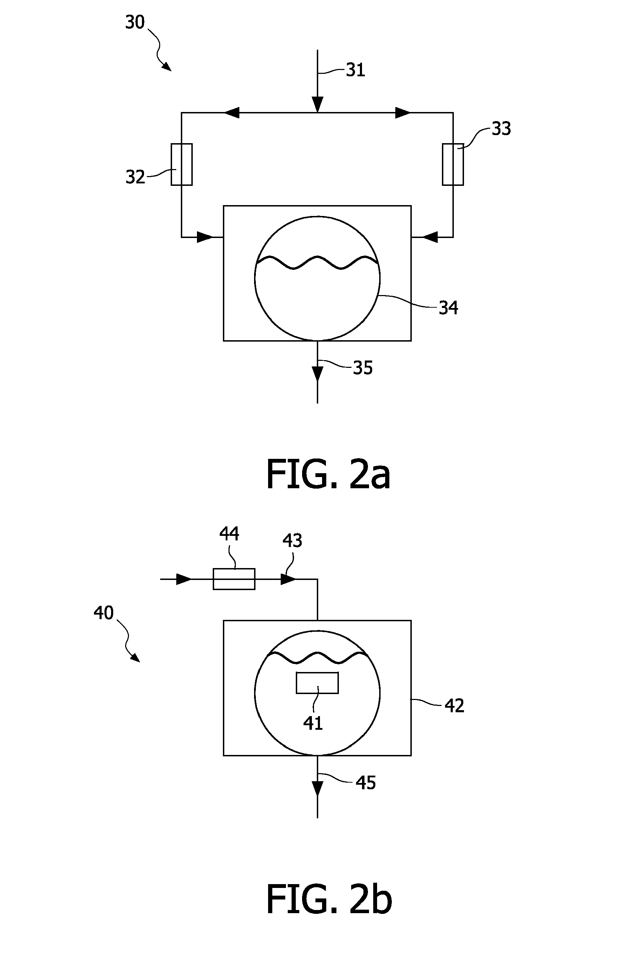

Figure 2a shows a washing device 30 comprising a water supply 31 that leads water to a radical oxygen species ROS generator 32 according to the invention as well as a washing agent input 33. Water irradiated by the ROS generator 32 is transported to the washing compartment 34. There, the water comprising the ROS is combined with the water to which detergents were added in the washing agent input 33. With this mixture, the washing operations can be performed, such as washing of textiles or dishwashing, depending on the type of washing compartment 34. After completing the washing operations, the processed water is removed as waste water by an exhaust 35. The reactive oxygen species rapidly degrade the target stains by oxidation, resulting in environmentally safe waste products such as carbon dioxide, water and salts.

In figure 2b, another preferred embodiment of a washing device 40 according to the invention is shown, wherein the radical oxygen species generator 41 is placed inside the washing compartment 42. The washing device 40 further comprises a water supply 43 provided with a washing agent input 44 as known from conventional washing devices, and a waste water exhaust 45. As in this configuration, the ROS generator 41 is located closer to the object to be washed inside the washing compartment 42, the generated ROS are used very effectively in this configuration.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. Reactive oxygen species generator (1, 10, 32, 41), comprising:
- at least one vessel (2, 14) for containing water, and
- at least one source of UV-light (3, 11, 20) arranged to generate UV radiation of a wave-length range lower than 200 nm
wherein the source of UV-light is further arranged to irradiate, during operation, the water in the vessel.

2. Reactive oxygen species generator according to claim 1, **characterized in that** the vessel is suitable for the throughput of water.

3. Reactive oxygen species generator according to claim 2, **characterized in that** the source of UV-light is arranged to generate UV radiation at wavelengths between 170 and 175 nm.

4. Reactive oxygen species generator according to claim 2, **characterized in that** the source of UV-light is arranged to generate UV radiation at wavelengths between 190 and 195 nm.

5. Reactive oxygen species generator according to any of the preceding claims, **characterized in that** the generator comprises a phosphor composition (5, 24) arranged to absorb at least part of the UV-light generated by the source of UV-light, which phosphor is arranged to generate UV light mainly at wavelengths lower than 200 nm.

6. Reactive oxygen species generator according to claim 5, **characterized in that** the phosphor composition is arranged to generate UV light between 190 and 195 nm.

7. Reactive oxygen species generator according to claim 6, **characterized in that** the phosphor composition (5, 24) comprises at least one component selected from the group consisting of NdPO₄, LiNdF₄, PrPO₄, LiPrF₄, BiPO₄, LiBiF₄.

8. Reactive oxygen species generator according to any of the preceding claims, **characterized in that** the source of UV-light source comprises at least one lamp selected from mercury discharge lamps and excimer lamps.

9. Reactive oxygen species generator according to claim 8, **characterized in that** the UV light source comprises a Xenon excimer lamp.

10. Reactive oxygen species generator according to claim 8, **characterized in that** the UV light source comprises a Xenon excimer lamp provided with a phosphor composition (5, 24), wherein the phosphor composition is arranged to generate UV radiation between 190 and 195 nm.

11. Washing device (30, 40), comprising a reactive oxygen species generator (1, 10, 32, 41) according to any of the preceding claims.

12. Washing device according to claim 11, **characterized in that** the washing device is suitable for washing textile.

13. Washing device according to claim 11, **characterized in that** the washing device is suitable for washing solid objects, in particular dishes.

14. Method of washing an object, comprising the steps:
- providing washing water,
- irradiation of the washing water with UV-light at a wavelength lower than 200 nm, and
- contacting the irradiated washing water with the object.
